# EUROPÄISCHE PATENTANMELDUNG

(11) **EP 4 826 627 A1**
(43) Veröffentlichungstag der Anmeldung: **21.10.2026**
(21) Anmeldenummer: 26172423.1
(22) Anmeldetag: 15.04.2026
(51) Int. Cl.: G06Q 30/018, G06Q 50/40, G07C 5/00

(54) **NACHHALTIGKEITSTRACKER ZUM VERFOLGEN DER NACHHALTIGKEIT EINES FAHRZEUGES**

(30) Priorität: 16.04.2025 DE 102025114939
(71) Anmelder: Robert Bosch GmbH, 70442 Stuttgart (DE)
(72) Erfinder: Wostradowski, Uwe, 71263 Weil Der Stadt-Merklingen (DE); Babic, Marko, 74379 Ingersheim (DE); Karaca, Cem, 70736 Fellbach (DE); Storch, Michael, 71254 Ditzingen (DE)

(57) **Zusammenfassung**

Offenbart sind Nachhaltigkeitstracker zum Verfolgen einer Nachhaltigkeit eines Fahrzeuges gemäß einem Regelwerk. Ein Verfahren zum Verfolgen einer Nachhaltigkeit eines Fahrzeuges gemäß einem Regelwerk umfasst: Erfassen von einer oder von mehreren Angaben des Regelwerks über eine Intensität einer Emission von CO₂ durch einen oder durch mehrere jeweilige Energieträger bei deren Verbrauch durch das Fahrzeug; Erfassen von Daten, die mit einem oder mit mehreren Vorgängen zum Übertragen von Energie an das Fahrzeug verknüpft sind, wobei jeder Vorgang mit einer Zeit und mit einer Menge oder mit mehreren Mengen des einen oder der mehreren Energieträgers verknüpft ist; Speichern der Daten als eine Historie der Vorgänge zum Übertragen von Energie an das Fahrzeug; Bestimmen, basierend auf der Historie des Fahrzeuges, des CO₂-Fußabdrucks des Fahrzeugs basierend auf der Historie der Vorgänge zum Übertragen von Energie und der einen oder den mehreren Angaben des Regelwerks.

## Beschreibung

Die Erfindung betrifft einen Nachhaltigkeitstracker, insbesondere ein Verfahren und ein System zum Verfolgen der Nachhaltigkeit eines Fahrzeuges basierend auf Daten über eine Aufnahme und/oder einen Verbrauch eines oder mehrerer Energieträger durch das Fahrzeug.

### Stand der Technik

Im Zuge der Bestrebungen zur Förderung eines nachhaltigen Energieverbrauchs ohne Langzeitimplikationen für die Umwelt sind neue Technologien und Konzepte zum Betreiben von Fahrzeugen entstanden, die diese Ziele zumindest teilweise implementieren. Gleichzeitig sind Regelwerke entstanden, die darauf gerichtet sind, die Entwicklungen zu harmonisieren und Transparenz zu schaffen, etwa hinsichtlich der Nachhaltigkeit eines Fahrzeugs, um Nutzern eine umweltverträgliche Verwendung des Fahrzeugs zu ermöglichen. Das Fahrzeug kann dabei ein beliebiges, zu Land, zur Luft oder zu Wasser betriebenes Fahrzeug oder gar Stationäre Energieversorger sein.

Erneuerbare Energieträger wie etwa CO₂-neutraler Kraftstoff, der mit Hilfe von erneuerbarer Energie hergestellt wird, oder CO₂-neutral erzeugte elektrische Energie, lassen sich als solche in der Regel jedoch nicht von herkömmlichen Energieträgern unterscheiden. Zudem sind in den einschlägigen Regelwerken für Kraftstoffe und/oder elektrische Energie Angaben über eine effektive Emission von CO₂ durch die Verwendung eines Fahrzeugs mit dem jeweiligen Energieträger nicht verpflichtend. Eine Angabe über eine Intensität einer Emission von CO₂ durch einen Energieträger, wie etwa eine Angabe über eine Menge an CO₂-Äquivalenten pro Megajoule (MJ) oder Kilogramm (kg) des Energieträgers, kann einem Nutzer eines Fahrzeuges beim Aufnehmen und/oder beim Verbrauchen des Energieträgers somit nicht bekannt sein und/oder die Angaben können Änderungen unterliegen.

Das Schaffen von Transparenz, um einem Nutzer eine umweltverträgliche Verwendung eines Fahrzeugs zu ermöglichen, gestaltet sich daher schwierig. Es wäre folglich wünschenswert das Verfolgen der Nachhaltigkeit eines Fahrzeuges zu erleichtern, um eine hinsichtlich der Umweltverträglichkeit verbesserte Nutzung von Fahrzeugen zu ermöglichen.

### Offenbarung der Erfindung

Die Erfindung stellt einen Nachhaltigkeitstracker zum Verfolgen der Nachhaltigkeit eines Fahrzeuges mit den Merkmalen der unabhängigen Patentansprüche bereit. Bevorzugte Ausführungsformen sind Gegenstand der jeweiligen Unteransprüche.

Gemäß einem ersten Aspekt betrifft die Erfindung ein Verfahren zum Verfolgen einer Nachhaltigkeit eines Fahrzeuges gemäß einem Regelwerk, wobei das Verfahren umfasst: Erfassen von einer oder von mehreren Angaben des Regelwerks über eine Intensität einer Emission von CO₂ durch einen oder durch mehrere jeweilige Energieträger bei deren Verbrauch durch das Fahrzeug; Erfassen von Daten, die mit einem oder mit mehreren Vorgängen zum Übertragen von Energie an das Fahrzeug verknüpft sind, wobei jeder Vorgang mit einer Zeit und mit einer Menge oder mit mehreren Mengen des einen oder der mehreren Energieträgers verknüpft ist; Speichern der Daten als eine Historie der Vorgänge zum Übertragen von Energie an das Fahrzeug; Bestimmen, basierend auf der Historie des Fahrzeuges, des CO₂-Fußabdrucks des Fahrzeugs basierend auf der Historie der Vorgänge zum Übertragen von Energie und der einen oder den mehreren Angaben des Regelwerks.

Gemäß einer Weiterbildung umfasst das Bestimmen des CO₂-Fußabdrucks des Fahrzeugs ein Aktualisieren von zumindest einer Angabe der einen oder der mehreren Angaben des Regelwerks.

Gemäß einer Weiterbildung umfasst das Erfassen von Daten, die mit dem einem oder mit den mehreren Vorgängen zum Übertragen von Energie an das Fahrzeug verknüpft sind: Erfassen der einen oder der mehreren Mengen des einen oder der mehreren Energieträgers basierend auf Daten von einem Aufnahmepunkt P; und/oder Erfassen der einen oder der mehreren Mengen des einen oder der mehreren Energieträgers basierend auf Daten über eine Historie eines Verbrauchs des Fahrzeugs; und/oder Erfassen der einen oder der mehreren Mengen des einen oder der mehreren Energieträgers basierend auf Daten über einen Füllstand eines Energiespeichers des Fahrzeugs; und/oder Modellieren eines Füllstandes eines Energiespeichers des Fahrzeugs basierend auf der Historie der Vorgänge zum Übertragen von Energie und/oder der Historie des Verbrauchs des Fahrzeugs.

Gemäß einer Weiterbildung umfassen die einen oder die mehreren Angaben zumindest eine Angabe einer Intensität einer Emission von CO₂ von zumindest einem Energieträger des einen oder der mehreren Energieträger, welche die Intensität der Emission von CO₂ über den gesamten Lebenszyklus des zumindest einen Energieträgers angibt. Hierdurch kann ein effektiver Verbrauch an CO₂ dargestellt berücksichtigt werden.

Gemäß einer Weiterbildung umfasst das Verfahren ein Bereitstellen des CO₂-Fußabdrucks des Fahrzeugs auf einer Nutzervorrichtung, insbesondere einer mobilen Vorrichtung eines Nutzers des Fahrzeugs.

Gemäß einer Weiterbildung ist der CO₂-Fußabdruck in Form eines Verbrauchs und/oder in Form einer Reduktion des Verbrauchs im Vergleich zu einem fossilen Energieträger über eine Zeitperiode und/oder über eine Distanz in Gewicht an CO₂-Äquivalenten angegeben.

Gemäß einer Weiterbildung wird die Historie der Vorgänge zum Übertragen von Energie an das Fahrzeug in einer oder in mehreren Vorrichtungen zusammengeführt, insbesondere im Fahrzeug und/oder in einer Cloud.

Gemäß einer Weiterbildung umfasst das Verfahren, in Antwort auf eine Bestimmung, dass zumindest eine Menge von zumindest einem Energieträger an das Fahrzeug übertragen worden ist, für die keine Angabe über die Intensität der Emission von CO₂ durch einen Verbrauch des zumindest einen Energieträger durch das Fahrzeug erfasst worden ist: Bestimmen, dass die zumindest eine Menge eine Intensität der Emission von CO₂ einer äquivalenten Menge eines fossilen Brennstoffes aufweist; Aktualisieren der Intensität der Emission von CO₂ für die zumindest eine Menge in Antwort auf ein Verknüpfen der zumindest einen Menge mit einem Energieträger der einen oder der mehreren Energieträger des Regelwerks.

Gemäß einem zweiten Aspekt betrifft die Erfindung ein computerlesbares Speichermedium, das darauf gespeicherte Instruktionen umfasst, die, wenn sie durch einen oder durch mehrere Prozessoren eines Systems ausgeführt werden, das System dazu veranlassen das Verfahren wie oben beschrieben durchzuführen.

Gemäß einem dritten Aspekt betrifft die Erfindung ein System, wobei das System umfasst: ein Fahrzeug; eine oder mehrere Steuervorrichtungen mit einem oder mit mehreren Prozessoren; und das computerlesbare Speichermedium wie oben beschrieben. Das System kann etwa das Fahrzeug selbst, das Fahrzeug und eine Cloud, oder ein Fahrzeug und ein Kommunikationssystem sein, wie eine drahtgestütztes oder ein drahtloses Kommunikationssystem.

### Kurze Beschreibung der Zeichnungen

Merkmale und Vorteile der vorliegenden Erfindung werden nachfolgend anhand der Figuren beispielhaft erläutert. Es zeigt:
Figur 1 eine schematische Darstellung eines Nachhaltigkeitstrackers implementiert als ein Verfahren zum Verfolgen der Nachhaltigkeit eines Fahrzeuges; und
Figur 2 eine schematische Darstellung eines Nachhaltigkeitstrackers implementiert als ein System zum Verfolgen der Nachhaltigkeit eins Fahrzeuges.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

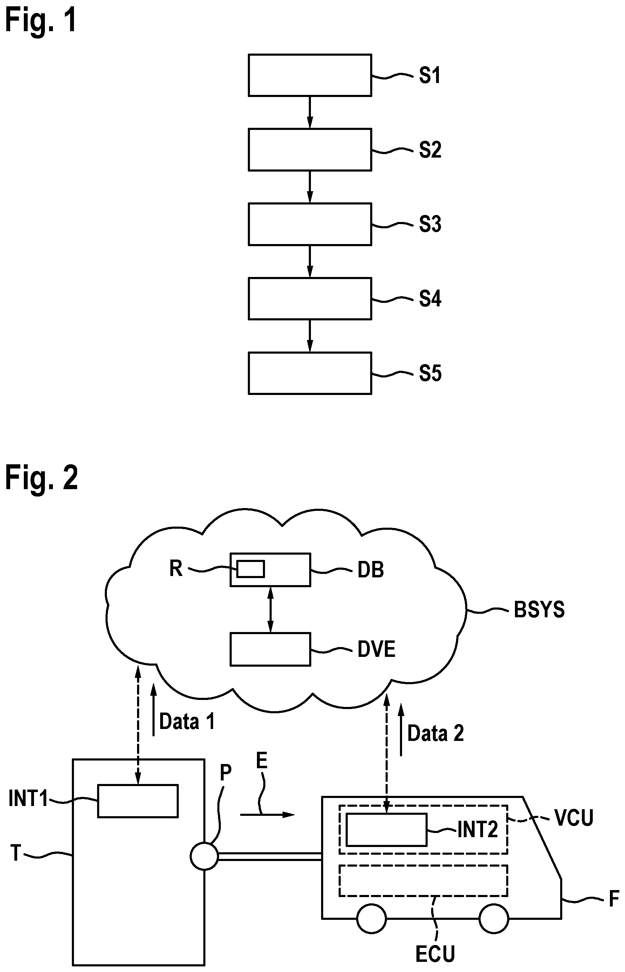

Figur 1 zeigt eine schematische Darstellung eines Nachhaltigkeitstrackers. Der Nachhaltigkeitstracker ist implementiert als ein Verfahren zum Verfolgen der Nachhaltigkeit eines Fahrzeuges. Das Verfahren ist nachfolgend mit Bezug zu den in der Figur 2 gezeigten Merkmalen eines System zum Verfolgen der Nachhaltigkeit eins Fahrzeuges im Detail beschrieben. Andere Implementierungen sind auch möglich. Die Beschreibung basierend auf den Figuren 1 und 2 ist als beispielhaft und nicht als beschränkend auszulegen.

Der Nachhaltigkeitstracker kann auf Daten basieren, die beim Übertragen von Energie an einer Vorrichtung zum Übertragen der Energie an ein Fahrzeug von der Vorrichtung an das Fahrzeug gesendet und/oder von der Vorrichtung zum Übertragen der Energie von dem Fahrzeug empfangen werden.

Das Verfahren zum Verfolgen der Nachhaltigkeit eines Fahrzeuges umfasst ein Erfassen S1 von Daten, die mit einem Vorgang zum Übertragen von Energie an das Fahrzeug F verknüpft sind, etwa einem Vorgang zum Übertragen von Energie an einem Aufnahmepunkt P.

Das Erfassen S1 von Daten kann ein Übertragen von ersten Daten Data 1 hinsichtlich des Vorgangs zum Übertragen von Energie umfassen. Das Übertragen der ersten Daten Data 1 kann ein Übertragen der ersten Daten Data 1 von dem Aufnahmepunkt P über eine erste Daten-Schnittstelle INT1 an ein Backend-System BSYS umfassen.

Das Erfassen S1 von Daten kann ein Übertragen von zweiten Daten Data 2 hinsichtlich des Vorgangs zum Übertragen von Energie umfassen. Das Übertragen der zweiten Daten Data 2 kann ein Übertragen der zweiten Daten Data 2 von dem Fahrzeug F über eine zweite Daten-Schnittstelle INT2 an das Backend-System BSYS umfassen.

Das Backend-System BSYS kann somit über eine Daten-Schnittstelle oder über zwei separate Daten-Schnittstellen INT1 und INT2 Daten mit dem Backend-System BSYS austauschen. Die Daten-Schnittstellen INT1 und/oder INT2 können drahtgebundene und/oder drahtlose Schnittstellen sein. Die Daten-Schnittstellen INT1 und/oder INT2 kann über eine zellulare oder eine satellitengestützte Kommunikationstechnologie implementiert sein. Das Übertragen von Daten kann in eine, mehrere oder alle Kommunikationsrichtungen kryprografisch abgesichert sein.

Das Erfassen S2 von Daten kann ein Auswerten der über die Daten-Schnittstellen INT1 und/oder INT2 erhaltenen Daten Data 1 und/oder Data 2 durch eine Datenverarbeitungseinheit DVE umfassen, dahingehend, ob beim Vorgang zum Übertragen von Energie Regeln eines Regelwerks einer Autorität, welche über das Regelwerk verfügt, eingehalten worden sind oder nicht.

Die von der Datenverarbeitungseinheit angewandten Regeln können bei einer möglichen Ausführungsform in einer Datenbank DB des Backend-Systems BSYS gespeichert sein und etwa nationale, regionale, europäische oder überregionale Umweltverordnungen implementieren. Beispielsweise können die EU-Verordnung 2018/2001 und die ergänzenden Richtlinien 2023/1184 und 2023/1185 implementiert sein. Diese Verordnungen können verbindliche Vorschriften für eine Bestimmung enthalten, wann ein Energieträger als vollständig oder zumindest teilweise erneuerbar zu betrachten ist.

Das Erfassen S1 von Daten kann ein Übertragen eines Ergebnisses einer solchen Bestimmung durch das Backend-System BSYS an ein Steuergerät des Fahrzeugs F und /oder an ein Endgerät des Fahrzeugfahrers und/oder an ein Endgerät des Fahrzeughalters umfassen.

Das Erfassen S1 von Daten kann in Echtzeit erfolgen. Alternativ oder ergänzend kann das Erfassen S1 ein nachträgliches Aktualisieren von Daten über das Übertragen von Energie umfassen, etwa an einem anderen Aufnahmepunkt und/oder über eine Cloud und/oder über eine Fahrzeugkommunikationseinheit VCU (Vehicle Communication Unit).

Die von dem Aufnahmepunkt P über die erste Schnittstelle INT1 der Tankstelle T übertragenen ersten Daten Data 1 können eine oder mehrere Angaben über einen CO₂-Fußabdruck des einen oder der mehreren Energieträger umfassen, die am Aufnahmepunkt P an das Fahrzeug übertragen worden sind. Die eine oder die mehreren Angaben können etwa eine Umweltbelastung beim Herstellen und/oder beim Transportieren des Energieträgers E zum Aufnahmepunkt P angeben.

Im Falle von Wasserstoff H₂ als Energieträger E kann etwa angegeben sein, ob und/oder zu welchem Anteil dieser unter Verwendung von erneuerbaren Energiequellen produziert worden ist. Die eine oder die mehreren Angaben können eine Bestimmung der Nachhaltigkeit des Energieträgers E über einen Teil oder die gesamte Lieferkette des Energieträgers E ermöglichen

Bei einem flüssigen oder gasförmigen Kraftstoff als Energieträger E kann der Kraftstoff über ein Transportmedium wie etwa ein Tankwagen oder eine Pipeline von einem Tank eines Steuerlagers zu Bodentanks verschiedener Tankstellen T transportiert werden. Der im Tank des Steuerlagers befindliche Kraftstoff kann eine Mischung unterschiedlicher Kraftstoffarten mit jeweiligen CO₂-Äquivalenten sein. Für eine solche Mischung kann laufend oder in bestimmten Intervallen ein CO₂-Fußabdruck aus den CO₂-Äquivalenten der darin enthaltenen Kraftstoffarten berechnet und den Daten zum übertragenen Kraftstoff hinterlegt werden.

Als Kraftstoff können etwa ein eFuel-Kraftstoff, Wasserstoff H₂, Erdgas, Flüssigerdgas, Autogas, Kerosin, Benzin, Dieselöl, Marinedieselöl, Biodiesel, Maschinenöl, Palmöl, hydrierte Pflanzenöle und/oder ein paraffinischer Kraftstoff eingesetzt werden. Ein Einsatz von anderen Kraftstoffen und/oder Kraftstoffgemischen ist aus möglich.

Die am Aufnahmepunkt P übertragen Energie kann alternativ oder ergänzend in Form von elektrischer Energie übertragen werden. Analog zum Kraftstoff kann die elektrische Energie aus einer oder aus mehreren Quellen mit gleichen oder unterschiedlichen CO₂-Fußabdrücken stammen, so dass die an das Fahrzeug übertragene Energie einen Energiegemisch mit einem CO₂-Fußabdruck entspricht.

Ein CO₂-Fußabdruck kann generell etwa als eine Menge an CO₂-Äquivalenten pro Megajoule (MJ) oder Kilogramm (kg) des Energieträgers angegeben sein. Eine Menge an Energie kann generell in MJ, Volumen in Litern (l), Distanz in km, Personenkilometern, Tonnenkilometern usw. gemäß der Renewable Energy Directive RED II EU 2018/2001 angegeben sein. Das Verfahren kann ein Umrechnen von einer Einheit in eine andere Einheit umfassen, etwa für alle Einheiten, die für ein Nachverfolgen einer Umweltverträglichkeit von Bedeutung sind.

Die ersten Daten Data 1 können zumindest eines umfassen von einer Identität und/oder einer Position wie etwa geografische Koordinaten des Aufnahmepunktes, einen Zeitpunkt und/oder eine Zeitdauer eines Vorgangs zum Übertragen von Energie am Aufnahmepunkt P und/oder eine Menge an übertragener Energie in Form eines oder mehrerer Energieträger.

Die Datenschnittstelle INT1 und/oder INT2 kann zum Empfangen von Auswerteergebnisdaten vom Backend-System BSYS konfiguriert sein. Das Auswerten kann ein Bestimmen eines CO₂-Fußabdrucks eines Fahrzeuges umfassen, insbesondere ein nachträgliches Bestimmen eines CO₂-Fußabdruck basierend auf den ersten Daten und Daten, die erst im Nachgang zum Übertragen von Energie an das Fahrzeug bereitgestellt worden sind, wie etwa Daten die mit einer Verzögerung von einem bis mehreren Tagen, einer Verzögerung von einer bis mehreren Wochen oder einer Verzögerung von einem bis mehreren Monaten bereitgestellt worden sind.

Das Fahrzeug F kann durch Auslesen eines integritätsgeschützten Speichers des Fahrzeuges F ausgelesen werden und als Teil der zweiten Daten Data 2 in geschützter Weise über die zweite Schnittstelle INT2 an die Datenverarbeitungseinheit DVE des Backend-Systems übertragen werden.

Das Fahrzeug F kann eine Fahrzeugkommunikationseinheit VCU (Vehicle Communication Unit) und eine Antriebssteuereinheit ECU (Engine Control Unit) umfassen. Die VCU kann die zweite Datenschnittstelle INT2 umfassen. Die ECU kann einen Sensor zum Messen eines Füllstandes eines Energiespeichers des Fahrzeuges F umfassen. Alternativ oder ergänzend kann das Fahrzeug auch ein OBFCM (On-Board Fuel Consumption Monitoring) aufweisen.

Während eines Vorgangs zum Übertragen von Energie kann der Füllstand des Energiespeichers in Echtzeit überwacht werden. Der Füllstand des Energiespeichers kann alternativ oder ergänzen während eines Betriebs des Fahrzeuges F bestimmt werden, etwa regelmäßig mit einer Frequenz, wie etwa 5-, 10-, 20-, 30-, 40-, 50- oder 60-mal pro Stunde während des Betriebs des Fahrzeuges. Der Füllstand des Energiespeichers kann an das Backend-System BSYS übertragen werden.

Der Nachhaltigkeitstracker kann Erfassen (S2) von Daten, die mit einem oder mit mehreren Vorgängen zum Übertragen von Energie an das Fahrzeug verknüpft sind, konfiguriert sein. Jeder Vorgang kann mit einer Zeit und mit einer Menge oder mit mehreren Mengen eines oder mehrerer Energieträger verknüpft sein.

Der Nachhaltigkeitstracker kann zum Speichern der Vorgänge zum Übertragung von Energie an das Fahrzeug F konfiguriert sein. Das Fahrzeug F kann zum Speichern eines Verbrauchs, der an das Fahrzeug F übertragenen Energie konfiguriert sein. Das Fahrzeug F kann zum Speichern (S3) einer Historie der Übertragung von Energie und/oder einer Historie des Verbrauchs dieser Energie durch das Fahrzeug F konfiguriert sein, etwa über eine Zeitperiode wie ein oder mehrere Jahre und/oder über eine Lebensdauer des Fahrzeugs F.

Der Nachhaltigkeitstracker kann zum Bestimmen eines Füllstandes vor einem Vorgang zum Übertragung von Energie an das Fahrzeug F konfiguriert sein. Der Nachhaltigkeitstracker kann zum Bestimmen eines Füllstandes nach einem Vorgang zum Übertragung von Energie an das Fahrzeug F konfiguriert sein. Der Nachhaltigkeitstracker kann im Fahrzeug F und/oder in einer Cloud implementiert sein. Der Nachhaltigkeitstracker kann zum Modellieren eines Füllstandes konfiguriert sein, basierend auf der Historie der Übertragung von Energie und/oder der Historie des Verbrauchs. Sensoren zum Erfassen des Füllstandes können angelernt sein, unter Verwendung einer Historie.

Der Nachhaltigkeitstracker ist konfiguriert zum Bestimmen (S4) eines CO₂-Fußabdrucks des Fahrzeug F, basierend auf der beim Vorgang zum Übertragung von Energie übertragenen einen oder mehreren Mengen eines oder mehrerer Energieträgers, soweit die einen oder die mehreren CO₂-Intensitäten des einen oder der mehreren Energieträger beim Bestimmen des CO₂-Fußabdrucks bekannt sind.

Der Nachhaltigkeitstracker umfasst ein Aktualisieren der einen oder der mehreren CO₂-Intensitäten, etwa basierend auf Daten, die nach dem Vorgang zum Übertragung von Energie verfügbar gemacht werden. Der Nachhaltigkeitstracker umfasst ein Aktualisieren des CO₂-Fußabdrucks des Fahrzeug F nach dem Aktualisieren der einen oder der mehreren CO₂-Intensitäten.

Das Backend-System BSYS kann Schnittstellen zu Servern einer Autorität umfassen, etwa einer Behörde, die zum Zulassen des Fahrzeugs für den Betrieb gemäß einem Regelwerk zuständig ist, oder andern vor- oder nachgelagerten Autoritäten.

Der Nachhaltigkeitstracker kann zum ein Bereitstellen des CO₂-Fußabdrucks des Fahrzeugs auf einer Nutzervorrichtung, insbesondere einer mobilen Vorrichtung eines Nutzers des Fahrzeugs konfiguriert sein.

## Patentansprüche

1. Verfahren zum Verfolgen einer Nachhaltigkeit eines Fahrzeuges gemäß einem Regelwerk, wobei das Verfahren umfasst:
Erfassen (S1) von einer oder von mehreren Angaben des Regelwerks über eine Intensität einer Emission von CO₂ durch einen oder durch mehrere jeweilige Energieträger bei deren Verbrauch durch das Fahrzeug (F);
Erfassen (S2) von Daten, die mit einem oder mit mehreren Vorgängen zum Übertragen von Energie an das Fahrzeug (F) verknüpft sind, wobei jeder Vorgang mit einer Zeit und mit einer Menge oder mit mehreren Mengen des einen oder der mehreren Energieträgers verknüpft ist;
Speichern (S3) der Daten als eine Historie der Vorgänge zum Übertragen von Energie an das Fahrzeug (F);
Bestimmen (S4), basierend auf der Historie des Fahrzeuges, des CO₂-Fußabdrucks des Fahrzeugs (F) basierend auf der Historie der Vorgänge zum Übertragen von Energie und der einen oder den mehreren Angaben des Regelwerks.

2. Verfahren nach Anspruch 1, wobei das Bestimmen (S4) des CO₂-Fußabdrucks des Fahrzeugs (F) ein Aktualisieren von zumindest einer Angabe der einen oder der mehreren Angaben des Regelwerks umfasst.

3. Verfahren nach Anspruch 1 oder 2, wobei das Erfassen (S1) von Daten, die mit dem einem oder mit den mehreren Vorgängen zum Übertragen von Energie an das Fahrzeug (F) verknüpft sind, umfasst:
Erfassen der einen oder der mehreren Mengen des einen oder der mehreren Energieträgers basierend auf Daten von einem Aufnahmepunkt P; und/oder
Erfassen der einen oder der mehreren Mengen des einen oder der mehreren Energieträgers basierend auf Daten über eine Historie eines Verbrauchs des Fahrzeugs (F); und/oder
Erfassen der einen oder der mehreren Mengen des einen oder der mehreren Energieträgers basierend auf Daten über einen Füllstand eines Energiespeichers des Fahrzeugs (F); und/oder
Modellieren eines Füllstandes eines Energiespeichers des Fahrzeugs (F) basierend auf der Historie der Vorgänge zum Übertragen von Energie und/oder der Historie des Verbrauchs des Fahrzeugs (F).

4. Verfahren nach irgendeinem der Ansprüche 1 bis 3, wobei die einen oder die mehreren Angaben zumindest eine Angabe einer Intensität einer Emission von CO₂ von zumindest einem Energieträger des einen oder der mehreren Energieträger umfassen, welche die Intensität der Emission von CO₂ über den gesamten Lebenszyklus des zumindest einen Energieträgers angibt.

5. Verfahren nach irgendeinem der Ansprüche 1 bis 4, wobei das Verfahren ein Bereitstellen (S5) des CO₂-Fußabdrucks des Fahrzeugs (F) auf einer Nutzervorrichtung, insbesondere einer mobilen Vorrichtung eines Nutzers des Fahrzeugs (F) umfasst.

6. Verfahren nach Anspruch 5, wobei der CO₂-Fußabdruck in Form eines Verbrauchs und/oder in Form einer Reduktion des Verbrauchs im Vergleich zu einem fossilen Energieträger über eine Zeitperiode und/oder über eine Distanz in Gewicht an CO₂-Äquivalenten angegeben ist

7. Verfahren nach irgendeinem der Ansprüche 1 bis 6, wobei die Historie der Vorgänge zum Übertragen von Energie an das Fahrzeug (F) in einer oder in mehreren Vorrichtungen zusammengeführt wird, insbesondere im Fahrzeug (F) und/oder in einer Cloud.

8. Verfahren nach irgendeinem der Ansprüche 1 bis 7, wobei, in Antwort auf eine Bestimmung, dass zumindest eine Menge von zumindest einem Energieträger an das Fahrzeug (F) übertragen worden ist, für die keine Angabe über die Intensität der Emission von CO₂ durch einen Verbrauch des zumindest einen Energieträger durch das Fahrzeug (F) erfasst worden ist, das Verfahren umfasst:
Bestimmen, dass die zumindest eine Menge eine Intensität der Emission von CO₂ einer äquivalenten Menge eines fossilen Brennstoffes aufweist;
Aktualisieren der Intensität der Emission von CO₂ für die zumindest eine Menge in Antwort auf ein Verknüpfen der zumindest einen Menge mit einem Energieträger der einen oder der mehreren Energieträger des Regelwerks.

9. Computerlesbares Speichermedium, das darauf gespeicherte Instruktionen umfasst, die, wenn sie durch einen oder durch mehrere Prozessoren eines Systems ausgeführt werden, das System dazu veranlassen das Verfahren nach irgendeinem der Ansprüche 1 bis 8 durchzuführen.

10. System, wobei das System umfasst:
ein Fahrzeug (F);
eine oder mehrere Steuervorrichtungen mit einem oder mit mehreren Prozessoren; und
das computerlesbare Speichermedium nach Anspruch 9.
